# FASCICULE DE BREVET EUROPEEN

(11) **EP 3 555 499 B1**
(45) Date de publication et mention de la délivrance du brevet: **23.09.2020**
(21) Numéro de dépôt: 17794031.9
(22) Date de dépôt: 26.10.2017
(51) Int. Cl.: F16H 61/02, F16H 63/30, F16H 63/38, F16D 23/04

(54) **BOITE DE VITESSE ROBOTISEE**
HALBAUTOMATISCHES GETRIEBE
SEMIAUTOMATIC GEARBOX

(30) Priorité: 16.12.2016 FR 1662629
(43) Date de publication de la demande: 23.10.2019
(73) Titulaire: Renault S.A.S., 92100 Boulogne-Billancourt (FR); Nissan Motor Co. Ltd, Yokohama-Shi, Kanagawa 220-8623 (JP)
(72) Inventeur: TERRASSE, Didier, 78360 Montesson (FR)
(74) Mandataire: Rougemont, Bernard
(86) Numéro de dépôt international: PCT/FR2017/052960
(87) Numéro de publication internationale: WO 2018/109290

(56) Documents cités:
- WO-A1-2015/067861
- WO-A1-2016/059457
- DE-A1-102007 042 799
- US-A1- 2005 139 025
- US-A1- 2014 214 293

## Description

L'invention se rapporte à une boite de vitesses robotisée. Une boite de vitesses robotisée hybride est une boite de vitesses mécanique à engrenages parallèles à laquelle est greffé un système automatisé électronique, qui pilote les sélecteurs et l'embrayage, souvent en association avec un système hydraulique, et qui se comporte :
- soit en mode automatique, comme une boite automatique changeant les rapports au moment le plus opportun,
- soit en mode manuel, le conducteur changeant de rapport à l'aide de boutons, palettes, ou d'un levier.

Généralement, une boite de vitesses robotisée est composée de :
∘ Plusieurs arbres (primaire, secondaire, transfert) sur lesquels sont montés des pignons fous et des pignons fixes définissant les différents rapports de marche avant, la marche arrière étant obtenue par inversion du sens de rotation de la machine électrique principale,
∘ De moyeux et baladeurs montés sur les arbres permettant de craboter les différents pignons fous,
∘ De billages logés dans le moyeu maintenant le baladeur en position point mort,
∘ D'actionneurs entrainant en translation des axes fourchettes munies de capteurs de position.

La demande internationale WO2015/067861 concerne une commande des passages de vitesses dans une boite de vitesses à arbres parallèles et munie d'un actionneur électrique de commande des passages de vitesse. Elle se rapporte plus spécifiquement à un procédé de régulation d'un actionneur de passage de vitesses à baladeur motorisé, comportant un élément de commande d'un système d'assistance mécanique à ressort, apte à accumuler dans un premier temps de l'énergie lorsque les dents du baladeur viennent en butée contre celles du pignon à craboter pour passer une vitesse, et à restituer cette énergie par détente dans un deuxième temps, pour assister l'engagement des dents du baladeur entre celles du pignon.

Dans une boite de vitesses robotisée, le passage d'une vitesse est obtenu par le coulissement d'un baladeur sur un moyeu solidaire d'un des arbres, les dents du baladeur venant craboter les dents d'une couronne crabot solidaire d'un pignon fou. Le baladeur est déplacé par une fourchette munie d'un capteur de position, ladite fourchette étant entrainée en translation par le doigt d'un actionneur.

Or, dans ce type de boite, survient souvent un problème au moment où le baladeur doit revenir en position point mort lors d'un dégagement de vitesse. En effet, le retour du baladeur est assuré par la fourchette qui déplace le baladeur. Cette fourchette comporte un capteur de position et est elle-même entrainée par le doigt d'un actionneur. La course du doigt de cet actionneur est en relation avec la position donnée par le capteur de la fourchette. Les dispersions des pièces concernées, ajoutées aux mouvements des lignes d'arbres peuvent être très importantes, et de ce fait, la course du doigt de l'actionneur peut dans certains cas être inférieure à la course nécessaire pour désengager entièrement les dents du baladeur des dents de la couronne crabot. Le système de billage du moyeu n'est pas encore actif, les billes n'étant pas dans les encoches de billage correspondant au point mort du baladeur. Elles ne permettent donc pas de ramener ce dernier dans sa position initiale, et provoquent alors un blocage de la boite de vitesses.

Une boite de vitesses robotisée selon l'invention est configurée pour éviter tout blocage au moment où le baladeur doit revenir en position point mort lors d'un dégagement de vitesse.

L'invention a pour objet une boite de vitesses robotisée comprenant un moyeu solidaire d'un arbre, un baladeur comprenant des dents, une couronne crabot comprenant des dents, un pignon fou et un actionneur, ledit baladeur étant apte à coulisser sur ledit moyeu au moyen d'une fourchette munie d'un capteur de position et entrainée en translation par un doigt dudit actionneur, et les dents dudit baladeur étant aptes à venir craboter les dents de ladite couronne solidaire dudit pignon fou.

La principale caractéristique d'une boite de vitesses selon l'invention est que des pattes élastiques faisant office de ressorts sont portées par la couronne crabot et sont disposées sur celle-ci de manière à repousser le baladeur lorsque celui-ci doit revenir en position point mort lors d'un dégagement de vitesse pour assurer ladite position. Le principe d'une telle boite de vitesses, est de mettre en œuvre des moyens mécaniques simples, et aptes à ramener le baladeur systématiquement et précisément en position point mort, lorsque ladite position est recherchée. Ces moyens se retrouvent sous la forme de pattes élastiques, qui initialement sont précontraintes et qui se relaxent progressivement au fur et à mesure que le baladeur se rapproche de la position correspondant au point mort, cette relaxation étant due au fait que les pattes tendent à retrouver leur forme naturelle. Ces pattes sont supportées directement ou indirectement (au moyen d'une pièce d'interface) par la couronne crabot et repoussent donc le baladeur jusqu'à sa position point mort. Préférentiellement, ces pattes sont peu encombrantes au point de n'avoir aucune influence sur l'espace occupé par la boite de vitesses. De même, il est supposé que la présence des pattes n'entrave aucunement le fonctionnement de la boite de vitesses. Ces pattes agissent comme des compléments à l'actionneur permettant de pallier les insuffisances de celui-ci lorsqu'il n'est plus en mesure d'assurer la course nécessaire du baladeur pour atteindre la position point mort.

Avantageusement, les dents du baladeur présentent un plan incliné, les pattes élastiques repoussant le baladeur au moment où elles viennent au contact dudit plan. Pour cette configuration, la présence des pattes ressorts nécessite une modification structurelle des dents du baladeur afin que l'action desdites pattes soit optimum lorsqu'elles repoussent le baladeur dans la position point mort. Cette modification se traduit par la création de plans inclinés au niveau des dents du baladeur, dont l'interaction avec les pattes élastiques va permettre auxdites pattes de se détendre afin de repousser le baladeur.

De façon préférentielle, les pattes élastiques sont solidaires d'une rondelle élastique apte à venir se plaquer contre la couronne crabot. De cette manière, en ajoutant cette rondelle, il n'est pas nécessaire de modifier les pièces déjà en place dans la boite de vitesses pour insérer les pattes élastiques. Avantageusement, cette rondelle est de faible épaisseur afin de s'insérer facilement et simplement dans le mécanisme de la boite de vitesses sans créer de surépaisseur. La géométrie et les dimensions de cette rondelle sont dictées par celles de la couronne crabot.

Préférentiellement, les pattes élastiques et la rondelle constituent une pièce commune, lesdites pattes étant régulièrement réparties autour de la rondelle. De cette manière, la rondelle et les pattes élastiques sont faciles et rapides à fabriquer. Cette répartition régulière des pattes autour de la rondelle, permet d'homogénéiser l'effort de poussée sur le baladeur.

De façon avantageuse, les pattes émergent radialement de la rondelle dans un plan incliné par rapport au plan de ladite rondelle. De cette manière, elles ont tendance à accroitre les dimensions de la rondelle en émergeant vers l'extérieur de celle-ci.

Avantageusement, chacune des pattes élastiques de la rondelle est destinée à venir s'insérer dans un creux délimité par une surface externe de la couronne crabot et deux dents successives de ladite couronne, ledit creux présentant une profondeur accrue pour permettre de ménager un espace entre ladite patte élastique et ladite surface externe. De cette manière, lorsqu'une vitesse est engagée, les pattes élastiques vont être précontraintes par le baladeur en venant se plaquer contre la paroi située entre deux dents successives de la couronne crabot. Lorsque le baladeur va s'éloigner de ladite couronne crabot pour retrouver la position point mort, chaque patte élastique va rencontrer le plan incliné d'une dent du baladeur et va avoir naturellement tendance à s'écarter de ladite paroi pour retrouver sa position initiale. De cette manière, en se détendant, les pattes vont contribuer à repousser le baladeur au niveau du plan incliné de chaque dent.

De façon préférentielle, la rondelle et les pattes sont en acier.

Préférentiellement, le moyeu dispose à sa périphérie d'orifices destinés chacun à recevoir une bille, le baladeur comprenant des rampes de point mort dotées chacune d'un logement, la position de point mort correspondant à une insertion complète de chaque bille dans l'un desdits logements. Avantageusement, les rampes sont assimilables à des dents qui s'étendent parallèlement aux dents du baladeur.

De façon avantageuse, chaque bille est repoussée de l'orifice au moyen d'un ressort inséré entre ladite bille et un fond dudit orifice, le moyeu disposant de trois orifices régulièrement répartis autour de sa périphérie. Autrement dit, les orifices sont répartis à 120° les uns des autres. Avantageusement, les orifices sont cylindriques et s'étendent radialement sur le moyeu.

Selon un autre mode de réalisation préféré d'une boite de vitesses selon l'invention, les pattes élastiques sont solidaires de la couronne crabot. Pour ce mode de réalisation, les pattes élastiques sont chacune directement solidarisée à la couronne crabot, et constituent avec celle-ci une pièce commune.

Une boite de vitesse selon l'invention présente l'avantage d'amener systématiquement et précisément le baladeur dans la position point mort, en demeurant d'un encombrement constant, et sans subir la moindre modification structurelle. Elle a de plus l'avantage d'assurer cette fonctionnalité supplémentaire grâce à une rondelle élastique fine, réalisée dans un matériau courant et dont la géométrie demeure simple.

On donne ci-après une description détaillée d'une boite de vitesses selon l'invention, en se référant aux figures suivantes :
- La figure 1 est une vue en perspective éclatée d'une boite de vitesses selon l'invention,
- La figure 2 est une vue en perspective agrandie d'une surface interne du baladeur d'une boite de vitesse selon l'invention,
- La figure 3 est une vue en perspective d'une couronne crabot et d'une rondelle élastique d'une boite de vitesse selon l'invention,
- La figure 4 est une vue en perspective agrandie d'un secteur de la couronne et de la rondelle de la figure 3,
- Les figures 5A, 5B et 5C sont des vues en coupe respectivement d'une boite de vitesse, d'une zone d'intersection entre le baladeur et la couronne crabot et d'une zone d'intersection entre le baladeur et le moyeu, lorsqu'une vitesse est engagée,
- Les figures 6A, 6B et 6C sont des vues en coupe respectivement d'une boite de vitesse, d'une zone d'intersection entre le baladeur et la couronne crabot, et d'une zone d'intersection entre le baladeur et le moyeu, lors d'une première phase de désengagement de la vitesse,
- Les figures 7A, 7B et 7C sont des vues en coupe respectivement d'une boite de vitesse, d'une zone d'intersection entre le baladeur et la couronne crabot, et d'une zone d'intersection entre le baladeur et le moyeu, lors d'une deuxième phase de désengagement de la vitesse,
- Les figures 8A, 8B et 8C sont des vues en coupe respectivement d'une boite de vitesse, d'une zone d'intersection entre le baladeur et la couronne crabot, et d'une zone d'intersection entre le baladeur et le moyeu, le baladeur étant au point mort.

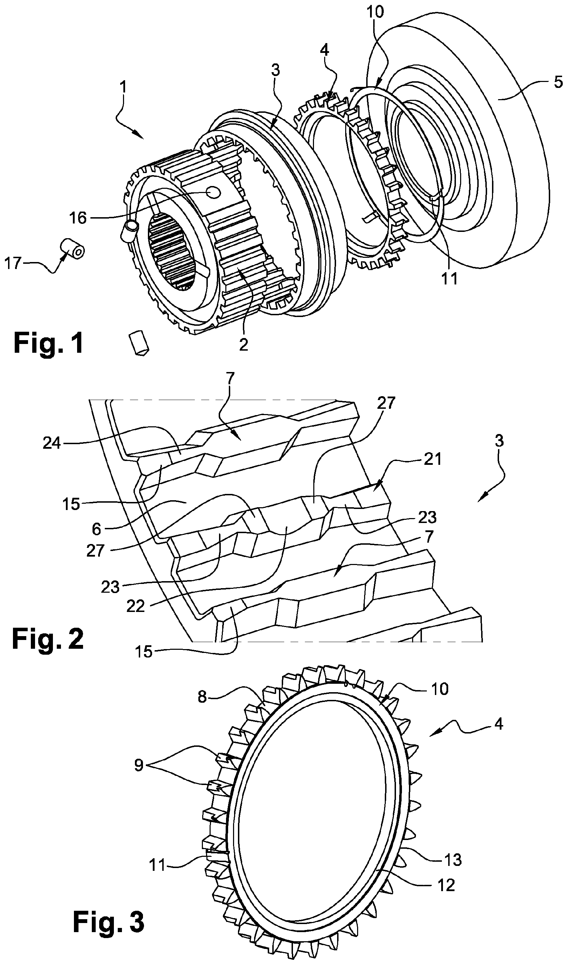

En se référant à la figure 1, une boite de vitesse 1 robotisée selon l'invention comprend un moyeu 2 solidaire d'un arbre, un baladeur 3 apte à coulisser sur ledit moyeu 2, et une couronne crabot 4 solidaire d'un pignon fou 5.

En se référant à la figure 2, le baladeur 3 est cylindrique et présente une surface interne 6 cylindrique sur laquelle sont implantées des dents 7 s'étendant le long de l'axe de révolution dudit baladeur 3. Chacune des dents 7 s'étend sur toute la longueur du baladeur 3 qui est sa dimension considérée le long de son axe de révolution, et sont régulièrement réparties sur toute la circonférence dudit baladeur 3. Autrement dit, les dents saillent 7 de la surface interne 6 du baladeur 3 vers le centre dudit baladeur 3.

En se référant à la figure 3, la couronne crabot 4 est cylindrique et présente une surface externe 8 cylindrique sur laquelle sont implantées des dents 9 s'étendant le long de l'axe de révolution de ladite couronne 4. Chacune des dents 9 s'étend sur toute la longueur de la couronne 4, qui est sa dimension considérée le long de son axe de révolution, et sont régulièrement réparties sur toute la circonférence de ladite couronne 4. Autrement dit, les dents 9 saillent de la surface externe 8 de la couronne 4 vers l'extérieur de ladite couronne 4.

Le passage d'une vitesse est obtenu par le coulissement du baladeur 3 sur le moyeu 2, les dents 7 dudit baladeur 3 venant craboter les dents 9 de la couronne crabot 4 solidaire du pignon fou 5. Le baladeur 3 est déplacé par une fourchette non visible sur les figures et qui est munie d'un capteur de position. Cette fourchette est entrainée en translation par le doigt d'un actionneur électrique non visible sur les figures.

En se référant aux figures 1, 3 et 4 une boite de vitesses 1 robotisée selon l'invention, comprend une rondelle élastique 10 annulaire, et dotée de trois pattes élastiques 11 régulièrement espacées autour de ladite rondelle 10, faisant entre elles un angle de 120°. Chaque patte élastique 11 est allongée et s'étend radialement sur la rondelle 10 selon un plan qui est incliné par rapport au plan de ladite rondelle 10. Plus précisément, la rondelle 10 est plane et présente un bord interne 12 et un bord externe 13, chaque patte 11 étant implantée sur ledit bord externe 13 de la rondelle 10 et s'étend vers l'extérieur de ladite rondelle 10. L'extrémité libre 14 de chaque patte 11 est légèrement repliée par rapport au reste de ladite patte 11 qui est rectiligne.

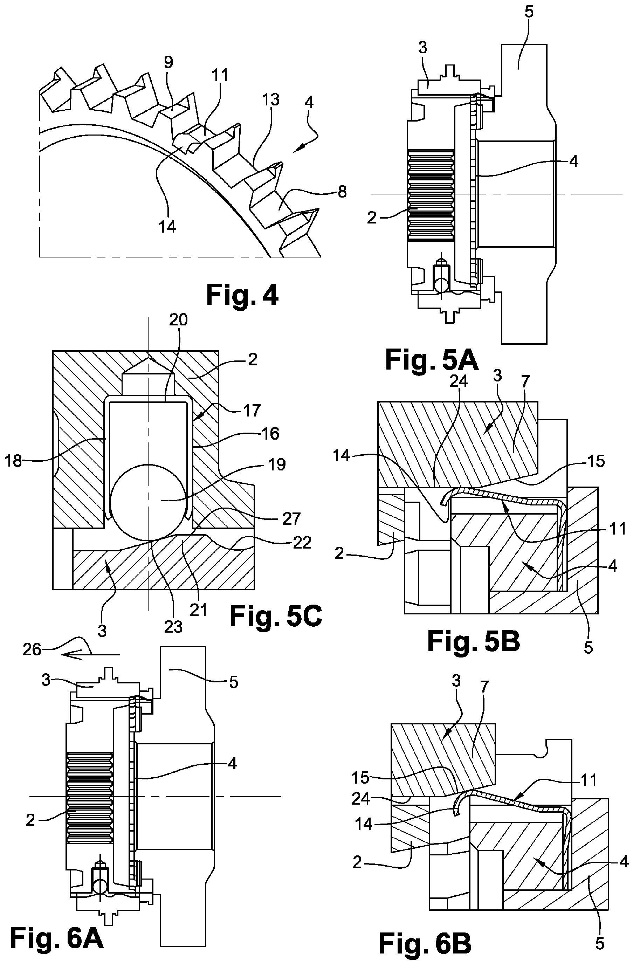

En se référant aux figures 3 et 4, la rondelle élastique 10 a les mêmes dimensions que celles de la couronne crabot 4 et vient se plaquer contre elle de sorte que chacune des trois pattes élastiques 11 se retrouve dans un intervalle entre deux dents successives 9 de ladite couronne 4. Chaque intervalle est ainsi délimité par deux dents 9 successives et par la surface externe 8 de la couronne 4. Afin de ménager un espace libre entre chaque patte élastique 11 et ladite surface externe 8, la couronne 4 a été creusée entre les deux dents 9.

En se référant à la figure 2, chaque dent 7 du baladeur 3 s'étend sur toute la longueur dudit baladeur 3 et présente une extrémité 15 usinée destinée à faire apparaitre un plan incliné. Cette extrémité 15 est amenée à collaborer avec les pattes élastiques 11 de la rondelle 10 élastique fixée à la couronne crabot 4, afin de permettre au baladeur 3 d'atteindre systématiquement et précisément une position correspondant au point mort, lorsque ladite position est recherchée.

En se référant à la figure 1, le moyeu 2 comprend trois orifices cylindriques et radiaux 16, disposées régulièrement sur sa périphérie. Autrement dit, les orifices 16 sont disposés à 120° les uns des autres et sont destinés chacun à recevoir une cartouche 17 de billage cylindrique.

En se référant aux figures 5C, 6C, 7C et 8C une cartouche 17 de billage comprend un étui cylindrique 18, une bille 19 et un ressort précontraint (non visible sur les figures) inséré entre un fond 20 de l'étui 18 et ladite bille 19. Le diamètre de la bille 19 étant légèrement supérieur à l'ouverture de l'étui 18, le ressort qui a tendance à repousser la bille 19 hors de l'étui 18 maintient ladite bille 19 en saillie dudit étui 18.

En se référant à la figure 2, le baladeur 3 comprend trois rampes 21 faisant entre elles 120°, et présentant chacune un logement central incurvé 22 encadré par deux contre-rampes 23. Ces trois rampes 21 s'étendent parallèlement aux dents 7 du baladeur 3 et sont destinées à coopérer avec les trois billes 19 insérées dans le moyeu 2. Ainsi, lorsque chacune des billes 19 se retrouve entièrement dans le logement central 22 d'une rampe 21, le baladeur 3 est dans une position correspondant parfaitement au point mort.

La cinématique de fonctionnement d'une boite de vitesses 1 selon l'invention est effectuée en se référant aux figures 5A à 8C.

Ainsi, en se référant à la figure 5A correspondant à une configuration pour laquelle une vitesse est engagée, le baladeur 3 est en appui sur la couronne crabot 4 solidaire du pignon fou 5. Pour cette position, en se référant à la figure 5C, chaque bille 19 est en appui contre une contre-rampe 23 d'une rampe 21 du baladeur 3 pour maintenir ledit baladeur 3 en appui contre la couronne crabot 4. Simultanément, en se référant à la figure 5B, chaque patte élastique 11 de la rondelle 10 élastique est plaquée contre la surface externe 8 de la couronne crabot 4 par une partie plate 24 d'une dent 7 du baladeur 3. Chaque patte élastique 11 n'exerce pas de poussée sur le baladeur 3.

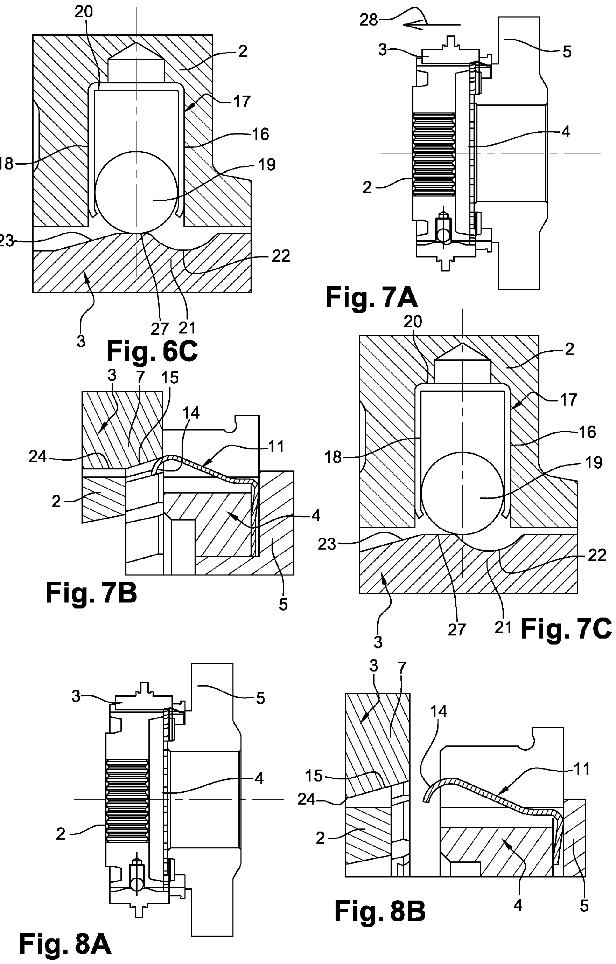

En se référant à la figure 6A, lors d'une première phase de désengagement de la vitesse depuis la position précédente, le baladeur 3 commence à coulisser sur le moyeu 2 en s'éloignant de la couronne crabot 4, comme l'indique la flèche 26. Pour cette nouvelle position, en se référant à la figure 6C, chaque bille 19 se retrouve sur une zone plate 27 d'une rampe 21 du baladeur 3, située entre une contre-rampe 23 et le logement central incurvé 22. Ladite bille 19 n'est pas active et ne participe pas au retour du baladeur 3 sur le moyeu 2. Simultanément, en se référant à la figure 6B, chaque patte élastique 11 vient en appui contre l'extrémité inclinée 15 d'une dent 7 du baladeur 3 et, en tentant de retrouver sa position de relaxation, commence à produire un effort qui repousse le baladeur 3 sur le moyeu 2. De cette manière, grâce à l'interaction spécifique de la patte élastique 11 avec l'extrémité inclinée 15 de la dent 7 du baladeur 3, ladite patte 11 contribue à repousser le baladeur 3 vers le moyeu 2 en venant assister l'actionneur de passage. Ainsi, si la course de l'actionneur s'avérait insuffisante pour dégager complètement le baladeur 3, les pattes élastiques permettent de compenser cette insuffisance.

En se référant à la figure 7A, lors d'une deuxième phase de désengagement de la vitesse depuis la position précédente, le baladeur 3 continue de coulisser sur le moyeu 2 en s'éloignant de la couronne crabot 4, comme l'indique la flèche 28. Pour cette nouvelle position, en se référant à la figure 7C, chaque bille 19 commence à pénétrer dans le logement central 22 d'une rampe 21 du baladeur 3, et va prendre le relais de chaque patte élastique 11 pour ramener le baladeur 3 au point mort. Simultanément, en se référant à la figure 7B, chaque patte élastique 11 continue d'interagir avec l'extrémité inclinée 15 d'une dent 7 du baladeur 3 pour finir de repousser le baladeur 3 afin de le sortir complètement de la couronne crabot 4.

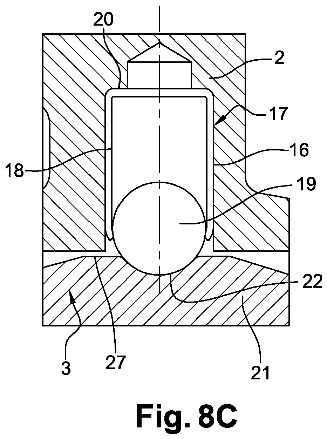

En se référant à la figure 8A, le baladeur 3 finit par parvenir à une position correspondant parfaitement au point mort. En se référant à la figure 8C, pour cette position, la bille 19 est complètement insérée dans le logement central 22 de la rampe 21 du baladeur 3. Simultanément, puisque le baladeur 3 est entièrement sorti de la couronne crabot 4, chaque patte élastique 11 ne subit plus aucune contrainte et a donc retrouvé sa position naturelle de relaxation.

## Revendications

1. Boite de vitesses (1) robotisée comprenant un moyeu (2) solidaire d'un arbre, un baladeur (3) comprenant des dents (7), une couronne crabot (4) comprenant des dents (9), un pignon fou (5) et un actionneur, ledit baladeur (3) étant apte à coulisser sur ledit moyeu (2) au moyen d'une fourchette munie d'un capteur de position et entrainée en translation par un doigt dudit actionneur, et les dents (7) dudit baladeur (3) étant aptes à venir craboter les dents (9) de ladite couronne (4) solidaire dudit pignon fou (5), **caractérisée en ce que** des pattes élastiques (11) faisant office de ressorts sont portées par la couronne crabot (4) et sont disposées sur celle-ci de manière à repousser le baladeur (3) lorsque celui-ci doit revenir en position point mort lors d'un dégagement de vitesse pour assurer ladite position.

2. Boite de vitesses selon la revendication 1, **caractérisée en ce que** les dents (7) du baladeur (3) présentent un plan incliné (15), et **en ce que** les pattes élastiques (11) repoussent le baladeur (3) au moment où elles viennent au contact dudit plan (15).

3. Boite de vitesses selon l'une quelconque des revendications 1 ou 2 **caractérisée en ce que** les pattes élastiques (11) sont solidaires d'une rondelle élastique (10) apte à venir se plaquer contre la couronne crabot (4).

4. Boite de vitesses selon la revendication 3, **caractérisée en ce que** les pattes élastiques (11) et la rondelle (10) constituent une pièce commune, et **en ce que** les pattes (11) sont régulièrement réparties autour de la rondelle (10).

5. Boite de vitesses selon l'une quelconque des revendications 3 ou 4, **caractérisée en ce que** les pattes (11) émergent radialement de la rondelle (10) et dans un plan qui est incliné par rapport au plan de la rondelle (10).

6. Boite de vitesses selon l'une quelconque des revendications 3 à 5, **caractérisée en ce que** chacune des pattes élastiques (11) de la rondelle (10) est destinée à venir s'insérer dans un creux délimité par une surface externe (8) de la couronne crabot (4) et deux dents successives (9) de ladite couronne (4), et **en ce que** ledit creux présente une profondeur accrue pour permettre de ménager un espace entre ladite patte élastique (11) et ladite surface externe (8).

7. Boite de vitesses selon l'une quelconque des revendications 3 à 6, **caractérisé en ce que** la rondelle (10) et les pattes (11) sont en acier.

8. Boite de vitesses selon l'une quelconque des revendications 1 à 7, **caractérisée en ce que** le moyeu (2) dispose à sa périphérie d'orifices (16) destinés chacun à recevoir une bille (19), et **en ce que** le baladeur (3) comprend des rampes (21) de point mort dotées chacune d'un logement (22), la position de point mort correspondant à une insertion complète de chaque bille (19) dans l'un desdits logements (22).

9. Boite de vitesses selon la revendication 8, **caractérisé en ce que** chaque bille (19) est repoussée de l'orifice (16) au moyen d'un ressort inséré entre ladite bille (19) et un fond 20) dudit orifice (16), et **en ce que** le moyeu (2) dispose de trois orifices (16) régulièrement répartis autour de sa périphérie.

10. Boite de vitesse selon l'une quelconque des revendications 1 ou 2, **caractérisée en ce que** les pattes élastiques (11) sont solidaires de la couronne crabot (4).

## Patentansprüche

1. Automatisiertes Getriebe (1), das eine fest mit einer Welle verbundene Nabe (2), eine Zähne (7) enthaltende Schiebemuffe (3), einen Zähne (9) enthaltenden Klauenring (4), ein Losrad (5) und einen Stellantrieb enthält, wobei die Schiebemuffe (3) auf der Nabe (2) mittels einer Schaltgabel gleiten kann, die mit einem Positionssensor versehen ist und durch einen Finger des Stellantriebs in Translationsbewegung angetrieben wird, und die Zähne (7) der Schiebemuffe (3) in die Zähne (9) des fest mit dem Losrad (5) verbundenen Rings (4) einrücken können, **dadurch gekennzeichnet, dass** als Federn dienende elastische Laschen (11) vom Klauenring (4) getragen werden und auf diesem so angeordnet sind, dass sie die Schiebemuffe (3) zurückdrücken, wenn diese bei einem Gangausrücken in die Totpunktstellung zurückkommen soll, um die Stellung zu gewährleisten.

2. Getriebe nach Anspruch 1, **dadurch gekennzeichnet, dass** die Zähne (7) der Schiebemuffe (3) eine geneigte Ebene (15) aufweisen, und dass die elastischen Laschen (11) die Schiebemuffe (3) in dem Moment zurückdrücken, in dem sie mit der Ebene (15) in Kontakt kommen.

3. Getriebe nach einem der Ansprüche 1 oder 2, **dadurch gekennzeichnet, dass** die elastischen Laschen (11) fest mit einer elastischen Unterlegscheibe (10) verbunden sind, die sich gegen den Klauenring (4) pressen kann.

4. Getriebe nach Anspruch 3, **dadurch gekennzeichnet, dass** die elastischen Laschen (11) und die Unterlegscheibe (10) ein gemeinsames Bauteil bilden, und dass die Laschen (11) gleichmäßig über die Unterlegscheibe (10) verteilt sind.

5. Getriebe nach einem der Ansprüche 3 oder 4, **dadurch gekennzeichnet, dass** die Laschen (11) aus der Unterlegscheibe (10) radial und in einer Ebene austreten, die bezüglich der Ebene der Unterlegscheibe (10) geneigt ist.

6. Getriebe nach einem der Ansprüche 3 bis 5, **dadurch gekennzeichnet, dass** jede der elastischen Laschen (11) der Unterlegscheibe (10) dazu bestimmt ist, sich in eine Mulde einzufügen, die von einer Außenfläche (8) des Klauenrings (4) und zwei aufeinanderfolgenden Zähnen (9) des Rings (4) begrenzt wird, und dass die Mulde eine Übertiefe aufweist, um es zu ermöglichen, einen Raum zwischen der elastischen Lasche (11) und der Außenfläche (8) auszusparen.

7. Getriebe nach einem der Ansprüche 3 bis 6, **dadurch gekennzeichnet, dass** die Unterlegscheibe (10) und die Laschen (11) aus Stahl sind.

8. Getriebe nach einem der Ansprüche 1 bis 7, **dadurch gekennzeichnet, dass** die Nabe (2) an ihrem Umfang über Öffnungen (16) verfügt, die je dazu bestimmt sind, eine Kugel (19) aufzunehmen, und dass die Schiebemuffe (3) Totpunkt-Rampen (21) enthält, die je mit einer Aufnahme (22) versehen sind, wobei die Totpunktstellung einer vollständigen Einführung jeder Kugel (19) in eine der Aufnahmen (22) entspricht.

9. Getriebe nach Anspruch 8, **dadurch gekennzeichnet, dass** jede Kugel (19) mittels einer Feder von der Öffnung (16) zurückgedrückt wird, die zwischen die Kugel (19) und einen Boden (20) der Öffnung (16) eingefügt ist, und dass die Nabe (2) über drei Öffnungen (16) verfügt, die gleichmäßig über ihren Umfang verteilt sind.

10. Getriebe nach einem der Ansprüche 1 oder 2, **dadurch gekennzeichnet, dass** die elastischen Laschen (11) fest mit dem Klauenring (4) verbunden sind.

## Claims

1. Robotized transmission (1) comprising a hub (2) rigidly connected to a shaft, a sliding gear (3) comprising teeth (7), a dog ring (4) comprising teeth (9), an idler pinion (5) and an actuator, said sliding gear (3) being capable of sliding over said hub (2) by means of a fork fitted with a position sensor and translated by a finger of said actuator, and the teeth (7) of said sliding gear (3) being capable of interlocking with the teeth (9) of said ring (4) rigidly connected to said idler pinion (5), **characterized in that** elastic tabs (11) acting as springs are borne by the dog ring (4) and are arranged thereon in such a way as to push back the sliding gear (3) when the latter must return to a neutral position when a gear ratio is being disengaged, so as to guarantee said position.

2. Transmission according to Claim 1, **characterized in that** the teeth (7) of the sliding gear (3) have an inclined plane (15), and **in that** the elastic tabs (11) push back the sliding gear (3) when they come into contact with said plane (15).

3. Transmission according to any one of Claims 1 or 2, **characterized in that** the elastic tabs (11) are rigidly connected to an elastic washer (10) capable of being pressed against the dog ring (4).

4. Transmission according to Claim 3, **characterized in that** the elastic tabs (11) and the washer (10) form a common piece, and **in that** the tabs (11) are distributed in a regular manner around the washer (10) .

5. Transmission according to any one of Claims 3 or 4, **characterized in that** the tabs (11) jut out radially from the washer (10) and in a plane that is inclined with respect to the plane of the washer (10) .

6. Transmission according to any one of Claims 3 to 5, **characterized in that** each of the elastic tabs (11) of the washer (10) is intended to be inserted into a hollow defined by an external surface (8) of the dog ring (4) and two successive teeth (9) of said ring (4), and **in that** said hollow has an increased depth in order to allow a space to be provided between said elastic tab (11) and said external surface (8).

7. Transmission according to any one of Claims 3 to 6, **characterized in that** the washer (10) and the tabs (11) are made of steel.

8. Transmission according to any one of Claims 1 to 7, **characterized in that** the hub (2) has, at the periphery thereof, holes (16) which are each intended to receive a ball (19), and **in that** the sliding gear (3) comprises neutral-point ramps (21) each provided with a housing (22), the neutral position corresponding to a complete insertion of each ball (19) into one of said housings (22).

9. Transmission according to Claim 8, **characterized in that** each ball (19) is pushed away from the hole (16) by means of a spring inserted between said ball (19) and a bottom (20) of said hole (16), and **in that** the hub (2) has three holes (16) regularly distributed around the periphery thereof.

10. Transmission according to either of Claims 1 or 2, **characterized in that** the elastic tabs (11) are rigidly connected to the dog ring (4).
